(19) Europäisches Patentamt
European Patent Office
Office européen des brevets

(11) **EP 2 805 150 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **13716945.4**

(22) Anmeldetag: **17.01.2013**

(51) Internationale Patentklassifikation (IPC):
*G01N 21/63* (2006.01)   *H01S 3/00* (2006.01)
*B23K 26/06* (2014.01)   *G02B 21/00* (2006.01)
*G01N 21/64* (2006.01)   *B23K 26/0622* (2014.01)

(52) Gemeinsame Patentklassifikation (CPC):
**G02B 21/0032; B23K 26/0622; B23K 26/0643;
B23K 26/0648; B23K 26/0652; B23K 26/0665;
G01N 21/6445; G01N 21/6458; G02B 21/0068;
G02B 21/0076;** H01S 3/0057; H01S 3/0085

(86) Internationale Anmeldenummer:
**PCT/DE2013/200002**

(87) Internationale Veröffentlichungsnummer:
**WO 2013/107448 (25.07.2013 Gazette 2013/30)**

(54) **LASERPULSFORMUNGSVERFAHREN**

LASER PULSE SHAPING METHOD

PROCÉDÉ DE MISE EN FORME D'IMPULSIONS

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.01.2012 DE 102012200858**

(43) Veröffentlichungstag der Anmeldung:
**26.11.2014 Patentblatt 2014/48**

(73) Patentinhaber: **Lindinger, Albrecht
14513 Teltow (DE)**

(72) Erfinder:
• **LINDINGER, Albrecht
14513 Teltow (DE)**
• **HEYNE, Karsten
14979 Großbeeren (DE)**

(74) Vertreter: **Fischer, Uwe
Patentanwalt
Moritzstraße 22
13597 Berlin (DE)**

(56) Entgegenhaltungen:
EP-A1- 1 662 296     WO-A2-2008/145371
US-A1- 2005 023 127     US-A1- 2011 299 558

• WATANABE T ET AL: "Formation of a doughnut laser beam for super-resolving microscopy using a phase spatial light modulator", OPTICAL ENGINEERING, SOC. OF PHOTO-OPTICAL INSTRUMENTATION ENGINEERS, BELLINGHAM, Bd. 43, Nr. 5, Mai 2004 (2004-05), Seiten 1136-1143, XP002467058, ISSN: 0091-3286, DOI: 10.1117/1.1690767

**Beschreibung**

Die Erfindung bezieht sich auf ein Laserpulsformungsverfahren zum mikroskopischen Betrachten oder Verändern eines Objekts.

Auf dem Gebiet der Mikroskopierverfahren ist das so genannte STED (fachsprachlich Stimulated Emission Depletion bzw. stimuliertes Emissions-Verarmungs-) Verfahren bekannt, mit dem sich Auflösungen unterhalb des Brechungslimits erreichen lassen (vgl. W. Hell and J. Wichmann, Opt. Lett. 19, 780-782 (1994). Bei diesem Verfahren werden mit einem ersten gaußförmigen Laserstrahl Moleküle des zu untersuchenden Objektes in einen höheren Zustand angeregt. Dem ersten Laserstrahl wird ein ringförmiger zweiter Laserstrahl überlagert, der die Moleküle im äußeren Ringbereich wieder in den Grundzustand abregt, so dass effektiv nur der innere Teil des Gaußprofils als effektiv wirksames Anregungsprofil verbleibt. Bei dem vorbekannten Verfahren besteht das Problem, dass zwei Laserstrahlen recht genau zueinander überlagert werden müssen, um die gewünschte Auflösungsverbesserung zu erreichen.

Ein Verfahren mit den Merkmalen gemäß dem Oberbegriff des Patentanspruchs 1 ist aus der Druckschrift EP 1 662 296 A1 bekannt.

Der Erfindung liegt daher die Aufgabe zugrunde, ein Laserpulsformungsverfahren anzugeben, das sich mit hoher Auflösung, aber dennoch einfach und reproduzierbar, durchführen lässt.

Diese Aufgabe wird erfindungsgemäß durch ein Laserpulsformungsverfahren mit den Merkmalen gemäß Patentanspruch 1 gelöst. Vorteilhafte Ausgestaltungen des erfindungsgemäßen Laserpulsformungsverfahrens sind in Unteransprüchen angegeben.

Danach ist erfindungsgemäß vorgesehen, dass jeder Frequenz des Laserpulses eine Phase, Amplitude und Polarisation zugeordnet wird, welche simultan und unabhängig geformt werden, und zwar mit einer ersten Pulsmodulationseinrichtung, und der ersten Pulsmodulationseinrichtung eine zweite Pulsmodulationseinrichtung nachgeordnet ist, die den von der ersten Pulsmodulationseinrichtung modulierten Laserpuls zweidimensional räumlich phasenmoduliert.

Ein wesentlicher Vorteil des erfindungsgemäßen Laserpulsformungsverfahrens besteht darin, dass es aufgrund der erfindungsgemäß vorgesehenen zeitlichen und zweidimensional räumlichen Modulation der Laserpulse besonders einfach möglich ist, jedem Raumpunkt in der Objektebene eine Phase und damit eine zeitliche Struktur zuzuordnen. Es können damit quasi beliebige räumlich zweidimensionale Pulsverteilungen erreicht werden, ohne eine Strahljustage zweier Strahlen - wie beim eingangs beschriebenen vorbekannten Verfahren - durchführen zu müssen.

Ein weiterer wesentlicher Vorteil des erfindungsgemäßen Laserpulsformungsverfahrens ist darin zu sehen, dass den Raumpunkten ohne großen Aufwand auch zeitabhängige Amplituden- und Polarisationswerte optional zugewiesen werden können.

Bezüglich der Durchführung der zweidimensional räumlichen Modulation wird es als vorteilhaft angesehen, wenn ein zweidimensionales Laserpulsfeld gebildet wird und zumindest die Phase des zweidimensionalen Laserpulsfeldes orts- und zeitabhängig moduliert wird.

Vorzugsweise wird im Rahmen der zweidimensional räumlichen Modulation der Laserpulse die Phase der Laserpulse orts- und zeitabhängig moduliert.

Zusätzlich zu einer Phasenmodulation kann auch eine Amplituden- und/oder Polarisationsmodulation durchgeführt werden; demgemäß wird es als vorteilhaft angesehen, wenn an einer vorgegebenen Anzahl an Raumpunkten des zweidimensionalen Laserpulsfeldes die Amplitude und/oder die Polarisation moduliert wird.

Besonders einfach und damit vorteilhaft lassen sich eine zeitliche Modulation und eine zweidimensionale räumliche Modulation der Laserpulse durchführen, wenn eine zeitliche Modulation der Laserpulse durchgeführt wird, indem ein die Laserpulse übertragender Laserstrahl zeitlich moduliert wird, und nach der zeitlichen Modulation des Laserstrahls der Laserstrahl zweidimensional räumlich unter Bildung einer Vielzahl an Unterlaserstrahlen aufgespalten wird, die gemeinsam das zweidimensionale räumliche Laserpulsfeld bilden, und die Phase der einzelnen Unterlaserstrahlen ortsabhängig und zeitabhängig moduliert wird.

Die modulierten Laserpulse werden vorzugsweise auf das zu betrachtende Objekt gerichtet, indem die modulierten Laserpulse durch eine Sammellinse oder einen Sammelspiegel in die Fokalebene fokussiert werden.

Alternativ oder zusätzlich können die modulierten Laserpulse in ein konfokales Mikroskop eingekoppelt werden.

Vorzugsweise ist das Laserpulsformungsverfahren dadurch gekennzeichnet, dass optische Sekundärwellen, die von dem beobachteten Objekt aufgrund der auftreffenden modulierten Laserpulse erzeugt werden, ausgewertet werden.

Unter Veränderung im Sinne dieser Anmeldung ist gemeint, dass das Objekt nicht nur betrachtet, sondern auch beeinflusst wird. Durch das beanspruchte Verfahren können somit molekulare Prozesse zeitlich verfolgt und/oder initiiert werden, und/oder molekulare Strukturen durch laserinduzierte Reaktionen beispielsweise im Nanometerbereich räumlich verändert werden.

Unter molekulare Prozesse ist im Sinne der Anmeldung Prozesse auf molekularer Ebene gemeint, wie beispielsweise die Bindung von Molekülen zu größeren Molekülkomplexen oder auch das Aufbrechen von Molekülbindungen wie auch das Ab- bzw. Anregen von Molekülen, wie beispielsweise die Ionisierung von Molekülen.

Die modulierten Laserpulse werden beispielsweise dazu eingesetzt chemische Reaktionen in Volumina unter dem Beugungslimit zu erzeugen, wodurch Materialien (z.B. Polymere) gezielt auf einer Größenordnung von wenigen Nanometern verändert werden. Mit diesen Laserpulsen werden Materialien mit einer Auflösung unter dem Beugungslimit auf einer Skala von wenigen Nanometern verändert bzw. mikrostrukturiert. Bei der Herstellung und Bearbeitung von Materialien auf der Nanometerskala oder größer wird der Laserpulszug sukzessive über einen großen Bereich bewegt um große zusammenhängende Strukturen mit Nanometerauflösung zu erzeugen. Eine hoch aufgelöste Strukturierung von Materialien ist zum Beispiel für den Fall der Polymerisierung durch die Arbeit von L.Li et al., SCIENCE, 324, 910-913 bekannt. Dabei werden durch geeignete Laserlichtan und -abregung ohne zeitliche Modulation Polymere mit einer Auflösung unterhalb des Beugungslimits gebildet. Dies wird in der vorliegenden Erfindung durch eine zusätzliche geeignete zeitliche Modulation verbessert.

Das Verfahren lässt sich beispielsweise im Rahmen eines STED-Verfahrens einsetzen; diesbezüglich wird es als vorteilhaft angesehen, wenn der Laserpuls derart räumlich und zeitlich moduliert wird, dass der äußere Teil des angeregten Probevolumens eine Laserpulsstruktur aufgeprägt bekommt, die zur effizienten Deaktivierung der angeregten Moleküle führt, und/oder der innere Teil des angeregten Probevolumens eine Laserpulsstuktur mit möglichst geringer Deaktivierung der angeregten Moleküle aufgeprägt bekommt. Dieser Ansatz ermöglicht durch die Formung der Anregungspulse eine Effizienzsteigerung der Fluoreszenz und eine gezielte Auswahl von Molekülen. Werden beispielsweise Moleküle angeregt, die in unterschiedlichen Umgebungen verschiedene Fluoreszenzdynamiken zeigen, so können gezielt Moleküle in vorgegebenen Umgebungen zur Fluoreszenz ausgewählt werden. Dies erhöht den Informationsgehalt der spektroskopischen Methode zusätzlich.

Für die Anwendung in einem STED-Verfahren wird der Laserpuls vorzugsweise derart räumlich und zeitlich moduliert, dass der deaktivierende Laserpulsteil eine andere Polarisation als der anregende Laserpulsteil aufweist und die beiden Teile von der Modulationseinrichtung unterschiedlich geformt werden können.

Um eine optimale Laserpulsbildung bzw. Laserpulsmodulation zu erreichen, wird es als vorteilhaft angesehen, wenn ein iteratives Optimierungsverfahren durchgeführt wird. Bezüglich eines solchen iterativen Optimierungsverfahrens wird es als vorteilhaft angesehen, wenn optische Sekundärwellen, die von dem beobachteten Objekt aufgrund der auftreffenden modulierten Laserpulse erzeugt werden, ausgewertet werden und die Phasen-, Amplituden- und/oder Polarisationsmodulation der Laserpulse im Rahmen des iterativen Optimierungsverfahrens verändert wird, bis die empfangenen optischen Sekundärwellen ein vorgegebenes Verhalten aufweisen oder innerhalb eines vorgegebenen Verhaltensrahmens liegen.

Besonders bevorzugt wird das iterative Optimierungsverfahren gemäß einem evolutionären Algorithmus durchgeführt.

Die Erfindung bezieht sich darüber hinaus auf eine Vorrichtung gemäß Patentanspruch 13.

Bezüglich der Vorteile der erfindungsgemäßen Vorrichtung sei auf die obigen Ausführungen im Zusammenhang mit dem erfindungsgemäßen Laserpulsformungsverfahren verwiesen, da die Vorteile des erfindungsgemäßen Laserpulsformungsverfahrens denen der erfindungsgemäßen Vorrichtung im Wesentlichen entsprechen.

Darüber hinaus bezieht sich die Erfindung auf ein Speichermedium mit einem darauf gespeicherten Programm, das nach Installation auf einer Recheneinrichtung die Recheneinrichtung veranlasst, ein Laserpulsformungsverfahren - wie oben beschrieben - und/oder ein iteratives Optimierungsverfahren mit oder ohne evolutionärem Algorithmus für ein solches Laserpulsformungsverfahren durchzuführen.

Bezüglich der Vorteile des erfindungsgemäßen Speichermediums sei auf die obigen Ausführungen im Zusammenhang mit dem erfindungsgemäßen Laserpulsformungsverfahren verwiesen, da die Vorteile des erfindungsgemäßen Speichermediums denen des erfindungsgemäßen Laserpulsformungsverfahrens im Wesentlichen entsprechen.

Die Erfindung wird nachfolgend anhand zweier Ausführungsbeispiele näher erläutert; dabei zeigen beispielhaft

Figur 1    schematische Darstellung der Vorrichtung zur Durchführung des erfindungsgemäßen Laserpulsformungsverfahrens

Figur 2    ein erstes Ausführungsbeispiel für eine erfindungsgemäße Laserpulsformungsvorrichtung, anhand derer auch das erfindungsgemäße Laserpulsformungsverfahren beispielhaft erläutert wird, und

Figur 3    ein zweites Ausführungsbeispiel für eine erfindungsgemäße Laserpulsformungsvorrichtung.

Der Übersicht halber werden in den Figuren für identische oder vergleichbare Komponenten stets dieselben Bezugszeichen verwendet.

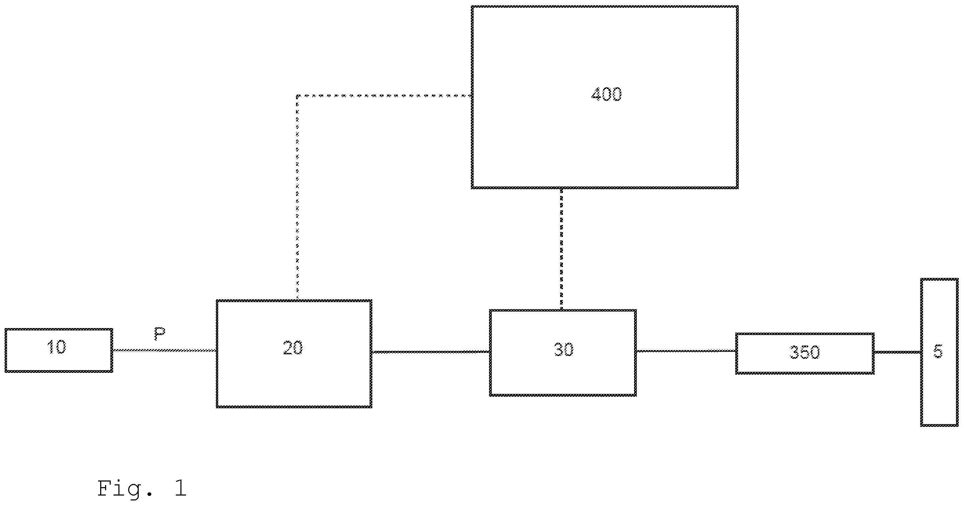

Figur 1 zeigt eine schematische Darstellung der Vorrichtung 1 zur Durchführung des erfindungsgemäßen Laserpulsformungsverfahrens. Der Laserstrahl P der Laserpulsquelle 10 wird zunächst durch einen ersten Pulsmodulator 20 und dann durch einen zweiten Pulsmodulator 30 geformt, bevor er auf das Objekt 5 gerichtet wird. Der Laserpuls wird durch den ersten Pulsmodulator 20 zeitlich und durch den zweiten Pulsmodulator 30 räumlich geformt. Optional fokussiert ein zusätzliches optisches Element 350 den geformten Laserpuls auf das Objekt 5.

Eine Rechnereinrichtung 400 kann den ersten Pulsmodulator 20 und den zweiten Pulsmodulator 30 ansteuern.

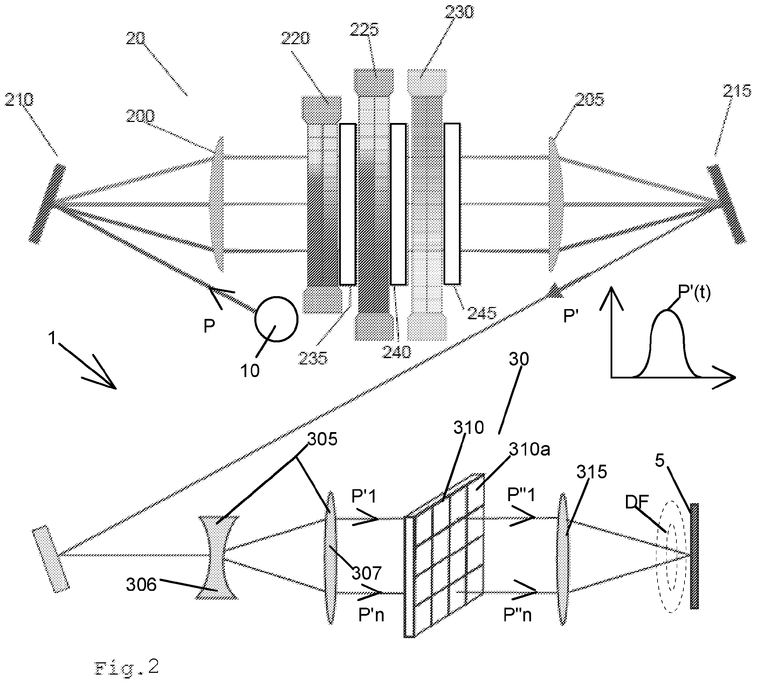

Die Figur 2 zeigt eine Vorrichtung 1, die zum mikroskopischen Betrachten eines Objekts 5 geeignet ist. Die Vorrichtung 1 umfasst eine Laserpulsquelle 10, die ausgangsseitig einen Laserpulse übertragenden Laserstrahl P erzeugt.

Der Laserpulsquelle 10 nachgeordnet ist eine erste Pulsmodulationseinrichtung 20, die eine zeitliche Modulation der Laserpulse des Laserstrahls P durchführt. Die erste Pulsmodulationseinrichtung 20 umfasst zwei Sammellinsen 200 und 205, zwei Gitter 210 und 215, drei doppelte Flüssigkristallmodulatoren 220, 225 und 230, einen Polarisator 235 sowie zwei $\lambda/2$-Platten 240 und 245.

Die beiden $\lambda/2$-Platten 240 und 245 sind bezüglich der Polarisationsachse des Polarisators 235 vorzugsweise in einem Winkel von -22,5° ausgerichtet. Bei den drei Flüssigkristallmodulatoren 220, 225 und 230 kann es sich beispielsweise um Modulatoren des Typs SLM1280 oder SLM256 handeln.

Der ersten Pulsmodulationseinrichtung 20 nachgeordnet ist eine zweite Pulsmodulationseinrichtung 30, die den von der ersten Pulsmodulationseinrichtung 20 zeitlich modulierten Laserstrahl P' zweidimensional räumlich phasenmoduliert. Hierzu weist die zweite Pulsmodulationseinrichtung 30 eine Aufweiteinrichtung 305, einen zweidimensionalen Phasenmodulator 310 sowie eine Sammellinse 315 auf. Die Funktion der Aufweiteinrichtung 305 besteht darin, den eingangsseitig ankommenden zeitlich modulierten Laserstrahl P' aufzuweiten und ein zweidimensionales Laserpulsfeld zu erzeugen, das durch eine Vielzahl an Unterlaserstrahlen gebildet wird. Von den Unterlaserstrahlen, die das zweidimensionale Laserpulsfeld bilden, sind in der Figur 2 aus Gründen der Übersicht lediglich zwei Unterlaserstrahlen mit Bezugszeichen gekennzeichnet, nämlich die Unterlaserstrahlen P'1 und P'n.

Zur Aufweitung des zeitlich modulierten Unterlaserstrahles P' bzw. zur Bildung des zweidimensionalen Laserpulsfeldes weist die Aufweiteinrichtung 305 zwei Linsen 306 und 307 auf.

Die von der Aufweiteinrichtung 305 gebildeten Unterlaserstrahlen P'1 - P'n gelangen zu dem zweidimensionalen Phasenmodulator 310, der eine räumlich zweidimensionale Phasenmodulation der Unterlaserstrahlen durchführt. Die phasenmodulierten Unterlaserstrahlen sind in der Figur 2 mit den Bezugszeichen P"1 - P"n gekennzeichnet.

Der zweidimensionale Phasenmodulator 310 kann zur Phasenmodulation pro Modulationssegment 310a jeweils ein transparentes Material aufweisen, das durch Anlegen einer modulationssegmentindividuellen Spannung bezüglich seiner Brechzahl moduliert wird. Zusätzlich oder alternativ kann pro Modulationssegment 310a auch eine modulationssegmentindividuelle Änderung der Polarisation und/oder der Amplitude erfolgen.

Die von dem zweidimensionalen Phasenmodulator 310 erzeugten phasenmodulierten Unterlaserstrahlen gelangen zu der Sammellinse 315, die die Unterlaserstrahlen P"1 - P"n auf das Objekt 5 fokussiert.

Die von der Sammellinse 315 auf das Objekt 5 fokussierten Unterlaserstrahlen erzeugen auf bzw. in dem zu beobachtenden Objekt 5 Sekundärwellen, die mit einer in der Figur 2 aus Gründen der Übersicht nicht weiter dargestellten Beobachtungseinheit erfasst und ausgewertet werden können. Das Erfassen und Auswerten der optischen Sekundärwellen kann mit Hilfe von herkömmlichen Komponenten und Einrichtungen durchgeführt werden, wie sie beispielsweise von dem vorbekannten und eingangs erwähnten STED-Verfahren her bekannt sind.

Die Figur 2 zeigt eine schematische Darstellung einer Vorrichtung zur Durchführung des erfindungsgemäßen Laserpulsformungsverfahrens. Die Vorrichtung 1 gemäß Figur 2 wird vorzugsweise derart betrieben, dass mit der ersten Pulsmodulationseinrichtung 20 ein vorgegebener zeitlicher Verlauf der Pulse des zeitlich modulierten Laserstrahls P' erzeugt wird. Der erzeugte zeitliche Pulsverlauf ist in der Figur 2 beispielhaft durch einen Verlauf P'(t) symbolisiert.

Mit der zweiten Pulsmodulationseinrichtung 30, insbesondere mit Hilfe des zweidimensionalen Phasenmodulators 310, wird eine vorgegebene räumliche Laserpulsverteilung erreicht, wie sie in der Figur 2 beispielhaft durch eine Donutform DF symbolisiert sind. Die gezeigte Donutform DF ist hier selbstverständlich nur beispielhaft zu verstehen; selbstverständlich kann durch eine andere Phasenmodulation mit Hilfe des Phasenmodulators 310 eine andere räumliche Pulsform erreicht werden.

Die erste Pulsmodulationseinrichtung 20 und die zweite Pulsmodulationseinrichtung 30 bilden bei dem Ausführungsbeispiel gemäß Figur 2 eine Modulationseinrichtung, die eine zeitliche und zweidimensionale räumliche Modulation von Laserpulsen ermöglicht, bei der die Phase der Laserpulse orts- und zeitabhängig moduliert wird. Bei dem Ausführungsbeispiel wird mit Hilfe des zweidimensionalen Phasenmodulators 310 zur räumlichen Pulsformbildung lediglich eine Phasenmodulation durchgeführt; selbstverständlich ist es möglich, zusätzlich auch die Amplitude und die Polarisation der Laserpulse orts- und zeitabhängig zu modulieren, wenn anstelle des zweidimensionalen Phasenmodulators 310 ein zweidimensionaler Amplituden-, Polarisations- und Phasenmodulator verwendet wird.

Die Arbeitsweise der ersten Pulsmodulationseinrichtung 20, nachfolgend auch kurz zeitlicher Pulsformer genannt, sowie die der zweiten Pulsmodulationseinrichtung 30, nachfolgend auch kurz räumlicher Pulsformer genannt, lässt sich mathematisch wie folgt beschreiben:

Erste Pulsmodulationseinrichtung 20 (zeitlicher Pulsformer):

Die zeitliche Form des elektrischen Feldes des Laserstrahls P ist über die inverse Fourier-Transformation der Spektralkomponenten in der Fourier-Ebene bestimmt:

$$\widetilde{E}(t) = \frac{1}{2\pi} \int \widetilde{E}(\omega)e^{i\omega t}d\omega$$

Durch eine Phasen- und Amplituden-Modulation in der Fourier-Ebene erhält man für das ausgehende Feld:

$$\widetilde{E}_{aus}(t) = \frac{1}{2\pi} \int R(\omega)e^{i\Phi(\omega)}\widetilde{E}_{in}(\omega)e^{i\omega t}d\omega$$

Auch eine Polarisationsformung kann durch entsprechende Modulation erreicht werden.

Damit ist also jeder Frequenz (genauer für einen Flüssigkristall-Pulsformer: jedes einem Flüssigkristallelement zugeordnete Frequenzband) eine Phase, Amplitude und Polarisation zugeordnet, welche simultan und unabhängig geformt werden können.

Zweite Pulsmodulationseinrichtung 30 (räumlicher Pulsformer):

Bei der Fourier-Strahlformung wird der kollimierte und zeitlich modulierte Laserstrahl P' durch einen zweidimensionalen Phasenmodulator 310 der zweiten Pulsmodulationseinrichtung 30 moduliert und nachfolgend mit einer Sammellinse 315 der zweiten Pulsmodulationseinrichtung 30 in die Fokalebene des Objekts 5 abgebildet. Wenn der Phasenmodulator 310 im Abstand von einer Brennweite vor der Sammellinse 315 positioniert ist, kann die Abbildung durch folgende Fourier-Transformation beschrieben werden:

$$\widetilde{E}_{aus}(u,v) = c \iint H(x,y)e^{-i\Theta(x,y)}\widetilde{E}_{in}(x,y)e^{-2\pi(\frac{ux}{f\lambda}+\frac{vy}{f\lambda})}dxdy$$

Die Position in der Fokalebene ist dabei proportional zum entsprechenden Wellenvektor $\Lambda_x, \Lambda_y$ :

$$u = \Lambda_x f\lambda ; \qquad v = \Lambda_y f\lambda$$

Mit dem zeitlichen Pulsformer 20 sind zuvor den Frequenzen zeitabhängige Phasen, Amplituden und Polarisationen zugeordnet worden. Daher kann man nun den unterschiedlichen Positionen in der Fokalebene jeweils zeitlich abhängige Phasen, Amplituden und Polarisationen zuweisen. Dies erlaubt somit eine unabhängige zeitliche Modulation des Lichtfeldes für verschiedene Orte.

Zusammengefasst kann die Vorrichtung 1 gemäß Figur 2 also beispielsweise wie folgt betrieben werden: Durch den spektral dispersiven zeitlichen Pulsformer 20 zur zeitlichen Pulsformung wird eine Zuordnung der Phasen-, Amplituden- und Polarisationswerte zu Frequenzen innerhalb der spektralen Breite des oder der Pulse vorgenommen. Nachfolgend wird mit dem räumlichen Pulsformer 30 das räumliche Profil über entsprechende Phasenverzögerungen geändert. Die nachfolgende Fokussierung in die Objektebene entspricht einer Fourier-Transformation dieses räumlich modulierten Lichtfeldes. Dadurch entsteht aus der Ortsdarstellung eine Wellenvektor-Darstellung in der Fokalebene. Die Ortsverteilung des Lichtfeldes ist somit einer Wellenvektor-Verteilung zugeordnet. Damit können also die Wellenvektoren, welche direkt mit den Frequenzen verbunden sind, durch eine entsprechend modulierte vorherige Ortsverteilung beeinflusst werden. Es kann somit jedem Punkt in der Fokalebene eine Phase, Amplitude und Polarisation mit den apparativ und durch die Fourier-Transformation vorgegebenen Einschränkungen zugeordnet werden. Es können damit also über zeitliche Änderungen molekulare Abläufe optimal verfolgt werden. Insbesondere für das STED-Verfahren ist eine radiale Frequenzänderung von Vorteil, um eine flexible und gut angepasste optische Interaktion zu erreichen.

Das beschriebene Verfahren kann insbesondere zur unterschiedlichen räumlichen, spektralen und zeitlichen Formung der beiden Lichtfelder für die STED-Mikroskopie genutzt werden. Durch nach außen radial zunehmenden negativen linearen Chirp (bezüglich des Betrages) können die weiter außen liegenden niedrigeren Frequenzkomponenten zum Beispiel zeitlich verzögert werden. Dieses erfolgt vorzugsweise durch eine quadratische radiale räumliche Phase. Auf diese Weise erhält man also eine Rotverschiebung des verzögerten Abregungspulses. Eine zeitliche Frequenzänderung des Abregungsüberganges kann zudem verfolgt werden. Zur Erzeugung unterschiedlicher Formen von Anrege- und Abregepuls kann die Frequenzabhängigkeit der Doppelbrechung ausgenutzt werden. Durch Aufhebung der Doppelbrechung zum Beispiel für den Anregungspuls wird dieser unverändert durchtreten, während gleichzeitig der rotverschobene Abregungspuls über eine zirkulare Phase ringförmig geformt werden kann. Damit werden also innerhalb eines Laserpulses eine gaussförmige blauverschobene Anregung und eine stimulierte ringförmige rotverschobene Abregung möglich.

Durch die zudem mögliche Polarisationsformung kann die angegebene Pulsformung bei der STED-Mikroskopie noch verbessert werden. So könnte zum Beispiel ein Spektralbereich eine andere Polarisation als ein anderer aufgeprägt bekommen und nachfolgend der höherfrequente Spektralbereich parallel zur optischen Achse polarisiert durch den doppelbrechenden Flüssigkristall des räumlichen Pulsformers 30 gehen, so dass keine Phasenverzögerung auftritt, während der niedrigfrequentere senkrecht dazu polarisierte Spektralbereich durch den räumlichen Pulsformer 30 gezielt verändert werden könnte. Die mit einer räumlichen quadratischen Phase einhergehende Ortsverbreiterung im Fokus kann auf diese Weise zudem vermieden werden. Damit wird eine noch flexiblere und präzisere Pulsformung realisierbar.

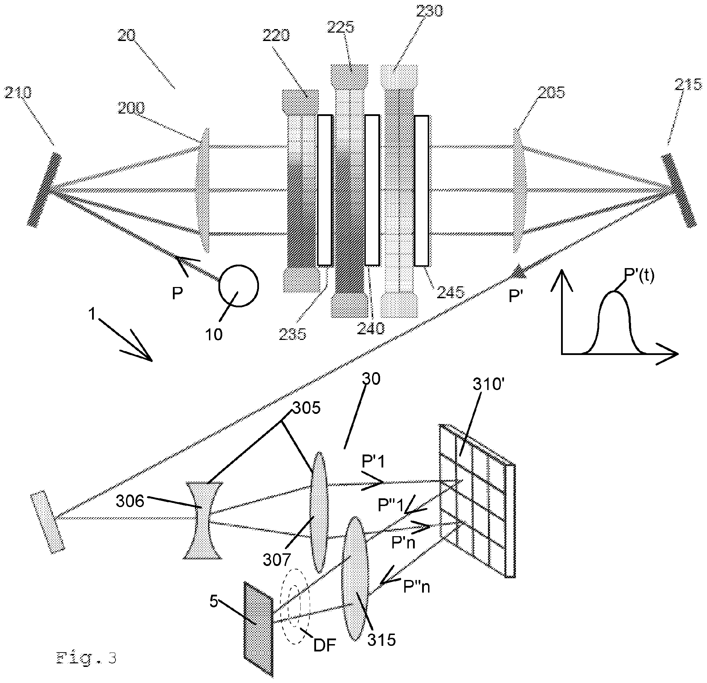

Die Figur 3 zeigt ein zweites Ausführungsbeispiel für eine erfindungsgemäße Vorrichtung 1. Die Vorrichtung 1 umfasst eine erste Pulsmodulationseinrichtung 20, die der Pulsmodulationseinrichtung 20 gemäß Figur 2 entspricht. Diesbezüglich sei auf die obigen Ausführungen im Zusammenhang mit der Figur 2 verwiesen.

Auch eine zweite Pulsmodulationseinrichtung 30 der Vorrichtung 1 gemäß Figur 3 entspricht im Wesentlichen der zweiten Pulsmodulationseinrichtung 30 gemäß Figur 2; unterschiedlich ist lediglich die Arbeitsweise des zweidimensionalen Phasenmodulators 310'. Während nämlich der zweidimensionale Phasenmodulator 310 gemäß Figur 2 im Transmissionsbetrieb betrieben wird, arbeitet der zweidimensionale Phasenmodulator 310' gemäß Figur 3 im Reflexionsmodus. Die auf den zweidimensionalen Phasenmodulator 310' auffallenden Unterlaserstrahlen P'1 - P'n werden somit von dem zweidimensionalen Phasenmodulator 310' reflektiert und gelangen zu einer Sammellinse 315, die auf derselben Seite des Phasenmodulators 310 angeordnet ist wie die Aufweiteinrichtung 305. Die Sammellinse 315 fokussiert die reflektierten und zweidimensional räumlich modulierten Laserstrahlen P"1 - P"n auf das zu betrachtende Objekt 5.

Der zweidimensionale Phasenmodulator 310' kann zur Phasenmodulation pro Modulationssegment 310a beispielsweise jeweils ein transparentes Material aufweisen, das durch Anlegen einer modulationssegmentindividuellen Spannung bezüglich seiner Brechzahl moduliert wird. Zusätzlich oder alternativ kann pro Modulationssegment 310a auch eine modulationssegmentindividuelle Änderung der Polarisation und/oder der Amplitude erfolgen. Alternativ kann der zweidimensionale Phasenmodulator 310' zur Phasenmodulation pro Modulationssegment 310a jeweils einen beweglichen Spiegel aufweisen, der sich verstellen lässt und somit eine Phasenmodulation durch Änderung der optischen Weglänge bewirkt.

Durch eine geeignete Ansteuerung des Phasenmodulators 310 kann eine Phasenlage zwischen den Unterlaserstrahlen P"1-P"n erzeugt werden, mit der eine vorgegebene räumliche Laserpulsverteilung erreicht wird. Beispielsweise kann eine donut- oder kringelförmige Verteilung DF erreicht werden, wie sie im Zusammenhang mit der Figur 2 bereits erläutert worden ist. Diesbezüglich sei also auf die obigen Ausführungen im Zusammenhang mit der Figur 2 verwiesen.

Die oben beispielhaft im Zusammenhang mit den Figuren 2 und 3 beschriebenen Verfahren zur zeitlichen und zweidimensional räumlichen Modulation von Laserpulsen für mikroskopische Zwecke ist shematisch in Fig. 1 dargestellt und vorzugsweise durch eine oder mehrere der folgenden Punkte gekennzeichnet.

- Verwendung eines Kurzpulslasers
- Einfügen des spektral dispersiven Pulsformerdesigns in den Strahlengang zur zeitlichen Pulsformung
- Charakterisierung der Eingangspulsform durch Laserpulsdetektionsgeräte (z.B. FROG, Autokorrelator, Spektrometer)
- Veränderung der Pulsform hinsichtlich Amplitude, Phase und Polarisation mit Hilfe des Pulsformers; Durchgang des Laserstrahls durch Flüssigkristallarrays und/oder akustooptische Modulatoren und/oder Dazzler, die unabhängig voneinander angesteuert werden
- Einfügen des räumlich dispersiven zweidimensionalen Pulsformers in den Strahlengang zur räumlichen Pulsformung nach der zeitlichen Pulsformung
- Einfügen einer Fokussiereinheit, z.B. einer Sammellinse oder eines Sammelspiegels, nach der Pulsformungseinheit
- Positionierung des räumlichen Pulsformers in der ersten Bildebene des Beleuchtungsstrahlenganges des Mikroskops im Abstand von einer Brennweite zur ersten Linse des Mikroskops
- Räumliche Pulsformung mit radial abhängigen Frequenzkomponenten, welche über spektrale Dispersion zeitabhängig geformt werden können
- Kombinierte zeitliche und räumliche Pulsformung durch Ansteuerung beider Pulsmodulatoren
- Vordefinierte zeitliche und räumliche Lichtfelder in der Objektebene durch parametrische zeitliche und räumliche Pulsformung mit beiden Modulatoren

- Einsatz speziell radial geformter Pulsprofile in der STED-Mikroskopie
- Charakterisierung der vollständigen Form des Ausgangspulses in Amplitude, Phase und Polarisation durch Laserpulsdetektionsgeräte (z.B. FROG, XFROG, PG-FROG, Autokorrelator, Kreuzkorrelator, Spektrometer) und geeignet positionierte Lichtpolarisatoren
- Zusätzliche Möglichkeit zur Ausführung eines iterativen, freien oder parametrischen Optimierungsprozesses unter Verwendung evolutionärer Algorithmen
- Gerätspezifische Simulation der entstehenden Pulsformen mit den dabei auftretenden apparativ bedingten Effekten (wie z.B. Pulsreplika)

Die für das Verfahren verwendete apparative Vorrichtung 1 zur Durchführung des Laserpulsformungsverfahrens weist vorzugsweise ein oder mehrere der folgenden Teile oder Elemente auf:

- Kurzpulslaser, welcher Pulse in dem Frequenzbereich liefert, der für die elektronische Anregung und Mikroskopie des zu untersuchenden Moleküls erforderlich ist
- 4f-Laserpulsformer zur zeitlichen Pulsformung oder akustooptische Modulatoren oder Dazzler
- Zweidimensionaler Modulator zur räumlichen Laserpulsformung
- Optisches Element zur Fokussierung, z.B. Sammellinse oder Sammelspiegel
- Mikroskop, insbesondere konfokales Mikroskop
- In der ersten Bildebene eines Mikroskops positionierter räumlicher Pulsformer eine Brennweite vor der ersten Linse
- Laserpulsdetektionseinheit (z. B. FROG, Kreuzkorrelation, Spektrometer, XFROG)
- Computerprogramm zur Ansteuerung der einzelnen Flüssigkristallelemente der Pulsformer zur Erzeugung parametrisch beschriebener Pulsformen
- Computerprogramm zur Durchführung eines iterativen parametrischen Optimierungsprozesses unter Verwendung evolutionärer Algorithmen sowie zum Auslesen der erforderlichen Pulsparameter aus den eingesetzten Laserpulsdetektionsgeräten.

Bezugszeichenliste

| 1 | Vorrichtung |
| 5 | Objekt |
| 10 | Laserpulsquelle |
| 20 | Pulsmodulationseinrichtung |
| 30 | Pulsmodulationseinrichtung |
| 200 | Sammellinse |
| 205 | Sammellinse |
| 210 | Gitter |
| 215 | Gitter |
| 220 | Flüssigkristallmodulator |
| 225 | Flüssigkristallmodulator |
| 230 | Flüssigkristallmodulator |
| 235 | Polarisator |
| 240 | $\lambda$/2-Platte |
| 245 | $\lambda$/2-Platte |
| 305 | Aufweiteinrichtung |
| 306 | Linse |
| 307 | Linse |
| 310 | Phasenmodulator |
| 310a | Modulationssegment |
| 310' | Phasenmodulator |
| 315 | Sammellinse |
| 350 | optisches Element |
| 400 | Rechnereinrichtung |

| DF | räumliche Donutform |
| P | Laserstrahl |
| P'(t) | zeitliche Pulsform |

P' Laserstrahl
P'1 Unterlaserstrahl
P'n Unterlaserstrahl
P"1 Unterlaserstrahl
P"n Unterlaserstrahl

## Patentansprüche

1. Laserpulsformungsverfahren zum mikroskopischen Betrachten oder Verändern eines Objekts (5), bei dem

   - mit einer ersten Pulsmodulationseinrichtung (20) eine zeitliche Modulation und mit einer der ersten Pulsmodulationseinrichtung (20) nachgeordneten zweiten Pulsmodulationseinrichtung (30) eine zweidimensionale räumliche Modulation von Laserpulsen (P) erfolgen, und
   - die modulierten Laserpulse (P"1-P"n) auf das Objekt (5) gerichtet werden,

   wobei

   - eine zeitliche Modulation der zeitlichen Phase für die einzelnen Frequenzkomponenten des Laserpulses erfolgt und eine ortsabhängige Modulation der räumlichen Phase der einzelnen räumlichen Bereiche des Laserpulses erfolgt und
   - der Laserpuls derart räumlich und zeitlich moduliert wird, dass ein Teil eines als Objekt angeregten Probevolumens eine Laserpulsstruktur aufgeprägt bekommt, die zur effizienten Deaktivierung der angeregten Moleküle des Probevolumens führt, und/oder ein anderer Teil des angeregten Probevolumens eine Laserpulsstruktur mit möglichst geringer Deaktivierung der angeregten Moleküle aufgeprägt bekommt, und
   - die zweite Pulsmodulationseinrichtung (30) den von der ersten Pulsmodulationseinrichtung (20) modulierten Laserpuls zweidimensional räumlich phasenmoduliert,

   **dadurch gekennzeichnet, dass**
   jeder Frequenz des Laserpulses (P) eine Phase, Amplitude und Polarisation zugeordnet wird, welche mit der ersten Pulsmodulationseinrichtung (20) simultan und unabhängig geformt werden.

2. Laserpulsformungsverfahren nach Anspruch 1,
   **dadurch gekennzeichnet, dass**
   die erste Pulsmodulationseinrichtung (20) drei doppelte Flüssigkristallmodulatoren (220, 225 und 230) umfasst und die simultane und unabhängige Formung von Phase, Amplitude und Polarisation mit den drei doppelten Flüssigkristallmodulatoren (220, 225 und 230) erfolgt.

3. Laserpulsformungsverfahren nach einem der voranstehenden Ansprüche,
   der Laserpuls derart räumlich und zeitlich moduliert wird, dass

   - der deaktivierende Laserpulsteil eine andere Polarisation als ein anregender Laserpulsteil aufweist und
   - die beiden Teile von der Modulationseinrichtung (20, 30) unterschiedlich geformt werden.

4. Laserpulsformungsverfahren nach einem der voranstehenden Ansprüche,
   **dadurch gekennzeichnet, dass**

   der Laserpuls derart räumlich und zeitlich moduliert wird, dass eine Rotverschiebung des deaktivierenden Laserpulsteils hervorgerufen wird und
   der rotverschobene deaktivierende Abregungspuls über eine zirkulare Phase ringförmig geformt wird und innerhalb des Laserpulses eine gaussförmige blauverschobene Anregung und eine stimulierte ringförmige rotverschobene Abregung erfolgt.

5. Laserpulsformungsverfahren nach einem der voranstehenden Ansprüche,
   **dadurch gekennzeichnet, dass**

   zur Durchführung der zweidimensionalen räumlichen Modulation ein zweidimensionales Laserpulsfeld gebildet wird und

an einer vorgegebenen Anzahl an Raumpunkten des zweidimensionalen Laserpulsfeldes die Amplitude und/oder die Polarisation moduliert wird.

6. Laserpulsformungsverfahren nach einem der voranstehenden Ansprüche,
   **dadurch gekennzeichnet, dass**

   - eine zeitliche Modulation der Laserpulse durchgeführt wird, indem ein die Laserpulse übertragender Laserstrahl (P) zeitlich moduliert wird, und
   - nach der zeitlichen Modulation des Laserstrahls der zeitlich modulierte Laserstrahl (P') zweidimensional räumlich unter Bildung einer Vielzahl an Unterlaserstrahlen (P'1-P'n) aufgespalten wird, die gemeinsam ein zweidimensionales räumliches Laserpulsfeld bilden, und
   - die Phase der einzelnen Unterlaserstrahlen (P'1-P'n) ortsabhängig und/oder zeitabhängig moduliert wird.

7. Laserpulsformungsverfahren nach einem der voranstehenden Ansprüche,
   **dadurch gekennzeichnet, dass**
   die modulierten Laserpulse durch ein optisches Element in die Fokalebene des Objekts (5) fokussiert werden.

8. Laserpulsformungsverfahren nach einem der voranstehenden Ansprüche,
   **dadurch gekennzeichnet, dass**
   die modulierten Laserpulse in ein konfokales Mikroskop eingekoppelt werden.

9. Laserpulsformungsverfahren nach einem der voranstehenden Ansprüche,
   **dadurch gekennzeichnet, dass**
   optische Sekundärwellen, die von dem beobachteten Objekt (5) aufgrund der auftreffenden modulierten Laserpulse erzeugt werden, ausgewertet werden.

10. Laserpulsformungsverfahren nach einem der voranstehenden Ansprüche,
    **dadurch gekennzeichnet, dass**

    - molekulare Prozesse zeitlich verfolgt und/ oder initiiert werden,
    - und/ oder Materialien räumlich verändert werden.

11. Laserpulsformungsverfahren nach einem der voranstehenden Ansprüche,
    **dadurch gekennzeichnet, dass**
    das Betrachten oder Verändern eines Objekts (5) mit einer Auflösung auf der Nanometerskala stattfindet.

12. Laserpulsformungsverfahren nach einem der voranstehenden Ansprüche,
    **dadurch gekennzeichnet, dass**
    ein iteratives Optimierungsverfahren durchgeführt wird, indem optische Sekundärwellen, die von dem beobachteten Objekt (5) aufgrund der auftreffenden modulierten Laserpulse erzeugt werden, ausgewertet werden und die Phasen-, Amplituden- und/oder Polarisationsmodulation der Laserpulse im Rahmen des iterativen Optimierungsverfahrens verändert wird, bis die empfangenen optischen Sekundärwellen ein vorgegebenes Verhalten aufweisen oder innerhalb eines vorgegebenen Verhaltensrahmens liegen.

13. Vorrichtung zur Durchführung des Laserpulsformungsverfahrens nach Anspruch 1 mit einer Modulationseinrichtung (20, 30), die eine zeitliche und zweidimensionale räumliche Modulation von Laserpulsen ermöglicht, bei der zumindest die Phase der Laserpulse ortsabhängig moduliert wird, wobei die Modulationseinrichtung eine erste Pulsmodulationseinrichtung (20) aufweist, die jeder Frequenz des Laserpulses eine Phase, Amplitude und Polarisation zuordnet, welche simultan und unabhängig geformt werden, und
    der ersten Pulsmodulationseinrichtung (20) eine zweite Pulsmodulationseinrichtung (30) nachgeordnet ist, die den von der ersten Pulsmodulationseinrichtung (20) modulierten Laserstrahl zweidimensional räumlich phasenmoduliert.

14. Vorrichtung nach Anspruch 13,
    **dadurch gekennzeichnet, dass**
    die erste Pulsmodulationseinrichtung (20) drei doppelte Flüssigkristallmodulatoren (220, 225 und 230) umfasst und die simultane und unabhängige Formung von Phase, Amplitude und Polarisation mit den drei doppelten Flüssigkristallmodulatoren (220, 225 und 230) erfolgt.

**15.** Speichermedium mit einem darauf gespeicherten Programm, das nach Installation auf einer Recheneinrichtung die Recheneinrichtung veranlasst, mit einer Vorrichtung nach Anspruch 13 oder 14 ein Verfahren nach einem der oben genannten Ansprüche 1 bis 12 durchzuführen.

**Claims**

**1.** Laser pulse shaping method for microscopic observation or modification of an object (5), wherein

- there is a temporal modulation of laser pulses (P) by way of a first pulse modulation device (20) and a two-dimensional spatial modulation of said laser pulses by way of a second pulse modulation device (30) disposed downstream of the first pulse modulation device (20), and
- the modulated laser pulses (P"1-P"n) are directed at the object (5),

with

- there being a temporal modulation of the temporal phase for the individual frequency components of the laser pulse and there being a spatially dependent modulation of the spatial phase of the individual spatial regions of the laser pulse, and
- the laser pulse being spatially and temporally modulated in such a way that one part of a sample volume excited as an object has impressed thereon a laser pulse structure which leads to efficient deactivation of the excited molecules of the sample volume, and/or another part of the excited sample volume has impressed thereon a laser pulse structure with as little deactivation of the excited molecules as possible, and
- the second pulse modulation device (30) spatially phase modulating, in two dimensions, the laser pulse modulated by the first pulse modulation device (20),

**characterized in that**
each frequency of the laser pulse (P) is assigned a phase, amplitude and polarization which are shaped simultaneously and independently by the first pulse modulation device (20).

**2.** Laser pulse shaping method according to Claim 1, **characterized in that**
the first pulse modulation device (20) comprises three double liquid crystal modulators (220, 225 and 230) and the simultaneous and independent shaping of phase, amplitude and polarization is implemented by the three double liquid crystal modulators (220, 225 and 230).

**3.** Laser pulse shaping method according to either of the preceding claims,
the laser pulse being spatially and temporally modulated in such a way that

- the deactivating laser pulse part has a different polarization to an exciting laser pulse part and
- the two parts are shaped differently by the modulation device (20, 30).

**4.** Laser pulse shaping method according to any one of the preceding claims,
**characterized in that**

the laser pulse is spatially and temporally modulated in such a way that a red shift of the deactivating laser pulse part is caused and
the red-shifted deactivating deexcitation pulse is shaped in ring-shaped fashion by way of a circular phase, and within the laser pulse there is a Gaussian blue-shifted excitation and a stimulated ring-shaped red-shifted deexcitation.

**5.** Laser pulse shaping method according to any one of the preceding claims,
**characterized in that**
a two-dimensional laser pulse field is formed for the purposes of carrying out the two-dimensional spatial modulation and the amplitude and/or the polarization is modulated at a specified number of spatial points in the two-dimensional laser pulse field.

**6.** Laser pulse shaping method according to any one of the preceding claims,
**characterized in that**

- a temporal modulation of the laser pulses is carried out by virtue of a laser beam (P) carrying the laser pulses being temporally modulated, and,
- following the temporal modulation of the laser beam, the temporally modulated laser beam (P') is split in two-dimensional spatial fashion with the formation of a plurality of sub-laser beams (P'1-P'n) which together form a two-dimensional spatial laser pulse field, and
- the phase of the individual sub-laser beams (P'1-P'n) is modulated in spatially dependent and/or time-dependent fashion.

7. Laser pulse shaping method according to any one of the preceding claims,
**characterized in that**
the modulated laser pulses are focussed into the focal plane of the object (5) by an optical element.

8. Laser pulse shaping method according to any one of the preceding claims,
**characterized in that**
the modulated laser pulses are coupled into a confocal microscope.

9. Laser pulse shaping method according to any one of the preceding claims,
**characterized in that**
optical secondary waves that are generated by the observed object (5) on account of the incident modulated laser pulses are evaluated.

10. Laser pulse shaping method according to any one of the preceding claims,
**characterized in that**

- molecular processes are tracked over time and/or are initiated,
- and/or materials are modified in space.

11. Laser pulse shaping method according to any one of the preceding claims,
**characterized in that**
the observation or modification of an object (5) is implemented at a nanometre scale resolution.

12. Laser pulse shaping method according to any one of the preceding claims,
**characterized in that**
an iterative optimization method is carried out by virtue of optical secondary waves that are generated by the observed object (5) on account of the incident modulated laser pulses being evaluated and the phase modulation, amplitude modulation and/or polarization modulation of the laser pulses being modified within the scope of the iterative optimization method until the received optical secondary waves have a specified behaviour or are within a specified scope of behaviour.

13. Apparatus for carrying out the laser pulse shaping method according to Claim 1 using a modulation device (20, 30) which facilitates a temporal and two-dimensional spatial modulation of laser pulses, wherein at least the phase of the laser pulses is modulated in spatially dependent fashion,

the modulation device having a first pulse modulation device (20) which assigns to each frequency of the laser pulse a phase, amplitude and polarization, which are shaped simultaneously and independently, and a second pulse modulation device (30) being disposed downstream of the first pulse modulation device (20) and spatially phase modulating, in two dimensions, the laser beam modulated by the first pulse modulation device (20).

14. Apparatus according to Claim 13,
**characterized in that**
the first pulse modulation device (20) comprises three double liquid crystal modulators (220, 225 and 230) and the simultaneous and independent shaping of phase, amplitude and polarization is implemented by the three double liquid crystal modulators (220, 225 and 230).

15. Storage medium with a program stored thereon, the program, following an installation on a computing device, causing the computing device, with an apparatus according to Claim 13 or 14, to carry out a method according to any one of the aforementioned Claims 1 to 12.

**Revendications**

1.  Procédé de mise en forme d'impulsions laser pour l'observation microscopique ou la modification d'un objet (5), avec lequel

    - une modulation dans le temps d'impulsions laser (P) est effectuée avec un premier dispositif de modulation d'impulsions (20) et une modulation spatiale bidimensionnelle avec un deuxième dispositif de modulation d'impulsions (30), disposé à la suite du premier dispositif de modulation d'impulsions (20),
    - les impulsions laser modulées (P"1-P"n) sont dirigées sur l'objet (5),
    - une modulation dans le temps de la phase temporelle est effectuée pour les composantes de fréquence individuelles de l'impulsion laser et une modulation dépendante du lieu de la phase spatiale des zones spatiales individuelles de l'impulsion laser est effectuée et
    - l'impulsion laser est modulée dans l'espace et dans le temps de telle sorte qu'une partie d'un volume d'échantillon excité en tant qu'objet se voit imprimer une structure d'impulsion laser qui mène à une désactivation efficace des molécules excitées du volume d'échantillon et/ou une autre partie du volume d'échantillon excité se voit imprimer une structure d'impulsion laser avec une désactivation la plus faible possible des molécules excitées et
    - le deuxième dispositif de modulation d'impulsions (30) effectue une modulation en phase spatiale bidimensionnelle de l'impulsion laser modulée par le premier dispositif de modulation d'impulsions (20), **caractérisé en ce que**

    chaque fréquence de l'impulsion laser (P) se voit associer une phase, une amplitude et une polarisation, lesquelles sont mises en forme simultanément et indépendamment avec le premier dispositif de modulation d'impulsions (20).

2.  Procédé de mise en forme d'impulsions laser selon la revendication 1, **caractérisé en ce que** le premier dispositif de modulation d'impulsions (20) comporte trois doubles modulateurs à cristaux liquides (220, 225 et 230) et la mise en forme simultanée et indépendante de la phase, de l'amplitude et de la polarisation s'effectue avec les trois doubles modulateurs à cristaux liquides (220, 225 et 230).

3.  Procédé de mise en forme d'impulsions laser selon l'une des revendications précédentes, l'impulsion laser étant modulée spatialement et temporellement de telle sorte que

    - la partie d'impulsion laser désactivante présente une polarisation autre qu'une partie d'impulsion laser excitante et
    - les deux parties du dispositif de modulation (20, 30) sont formées différemment.

4.  Procédé de mise en forme d'impulsions laser selon l'une des revendications précédentes, **caractérisé en ce que**

    l'impulsion laser est modulée spatialement et temporellement de telle sorte qu'un décalage dans le rouge de la partie d'impulsion désactivante est provoquée et
    l'impulsions de désexcitation désactivante décalée dans le rouge est mise en forme par le biais d'une phase circulaire et une excitation décalée dans le bleu gaussienne et une désexcitation décalée dans le rouge en forme d'anneau stimulée sont effectuées au sein de l'impulsion laser.

5.  Procédé de mise en forme d'impulsions laser selon l'une des revendications précédentes, **caractérisé en ce qu'**un champ d'impulsions laser bidimensionnel est formé en vue de réaliser la modulation spatiale bidimensionnelle et l'amplitude et/ou la polarisation est modulée au niveau d'un nombre prédéfini de points spatiaux du champ d'impulsions laser bidimensionnel.

6.  Procédé de mise en forme d'impulsions laser selon l'une des revendications précédentes, **caractérisé en ce que**

    - une modulation dans le temps des impulsions laser est effectuée en modulant dans le temps un rayon laser (P) qui transmet les impulsions laser et
    - après la modulation dans le temps du rayon laser, le rayon laser modulé dans le temps (P') est décomposé dans l'espace en deux dimensions en formant une pluralité de rayons laser secondaires (P'1-P'n), lesquels forment ensemble un champ d'impulsions laser bidimensionnel et
    - la phase des rayons laser secondaires (P'1-P'n) individuels est modulée en fonction du lieu et/ou en fonction du temps.

**7.** Procédé de mise en forme d'impulsions laser selon l'une des revendications précédentes, **caractérisé en ce que** les impulsions laser modulées sont concentrées par un élément optique dans le plan focal de l'objet (5).

**8.** Procédé de mise en forme d'impulsions laser selon l'une des revendications précédentes, **caractérisé en ce que** les impulsions laser modulées sont injectées dans un microscope confocal.

**9.** Procédé de mise en forme d'impulsions laser selon l'une des revendications précédentes, **caractérisé en ce que** des ondes secondaires optiques, qui sont générées par l'objet (5) observé en raison des impulsions laser modulées incidentes, sont interprétées.

**10.** Procédé de mise en forme d'impulsions laser selon l'une des revendications précédentes, **caractérisé en ce que**

- des processus moléculaires sont suivis dans le temps et/ou initiés,
- et/ou des matériaux sont modifiés dans l'espace.

**11.** Procédé de mise en forme d'impulsions laser selon l'une des revendications précédentes, **caractérisé en ce que** l'observation ou la modification d'un objet (5) s'effectue avec une résolution à l'échelle nanométrique.

**12.** Procédé de mise en forme d'impulsions laser selon l'une des revendications précédentes, **caractérisé en ce qu'**un procédé d'optimisation itératif est mis en œuvre, en interprétant les ondes secondaires optiques qui sont générées par l'objet (5) observé en raison des impulsions laser modulées incidentes et la modulation de phase, d'amplitude et/ou de polarisation des impulsions laser est modifiée dans le cadre du procédé d'optimisation itératif jusqu'à ce que les ondes secondaires optiques reçues présentent un comportement prédéfini et se trouvent à l'intérieur d'un cadre de comportement prédéfini.

**13.** Arrangement pour mettre en œuvre un procédé de mise en forme d'impulsions laser selon la revendication 1 comprenant un dispositif de modulation (20, 30) qui rend possible une modulation dans le temps et spatiale bidimensionnelle d'impulsions laser lors de laquelle au moins la phase des impulsions laser est modulée en fonction du lieu,

le dispositif de modulation possédant un premier dispositif de modulation d'impulsions (20) qui associe à chaque fréquence de l'impulsion laser une phase, une amplitude et une polarisation, lesquelles sont mises en forme simultanément et indépendamment et
un deuxième dispositif de modulation d'impulsions (30) étant disposé à la suite du premier dispositif de modulation d'impulsions (20), lequel module en phase spatialement et en deux dimensions le rayon laser modulé par le premier dispositif de modulation d'impulsions (20).

**14.** Arrangement selon la revendication 13, **caractérisé en ce que** le premier dispositif de modulation d'impulsions (20) comporte trois doubles modulateurs à cristaux liquides (220, 225 et 230) et la mise en forme simultanée et indépendante de la phase, de l'amplitude et de la polarisation s'effectue avec les trois doubles modulateurs à cristaux liquides (220, 225 et 230).

**15.** Support d'enregistrement sur lequel est enregistré un programme qui, après l'installation sur un dispositif de calcul, amène le dispositif de calcul, avec un arrangement selon la revendication 13 ou 14, à mettre en œuvre un procédé selon l'une des revendications 1 à 12 susmentionnées.

Fig. 1

Fig.2

Fig. 3

**IN DER BESCHREIBUNG AUFGEFÜHRTE DOKUMENTE**

**In der Beschreibung aufgeführte Patentdokumente**

- EP 1662296 A1

**In der Beschreibung aufgeführte Nicht-Patentliteratur**

- **W. HELL ; J. WICHMANN.** *Opt. Lett.,* 1994, vol. 19, 780-782

- **L.LI et al.** *SCIENCE,* vol. 324, 910-913